Europäisches Patentamt

(19) European Patent Office    (11) Publication number: **0 014 094**

Office européen des brevets                    A1

## (12) EUROPEAN PATENT APPLICATION

(21) Application number: **80300199.9**    (51) Int. Cl.³: **F 16 L 37/08**

(22) Date of filing: **22.01.80**

(30) Priority: **24.01.79 GB 7902462**

(43) Date of publication of application: **06.08.80**
**Bulletin 80/16**

(84) Designated Contracting States: **AT BE CH DE FR GB IT
LU NL SE**

(71) Applicant: **Crossley & Davenport Limited, Davenport
House Armytage Road, Brighouse West Yorkshire (GB)**

(72) Inventor: **Hanson, Geoffrey Gordon, Spring Cottage,
Pool Bank, Pool-in-Wharfdale Otley, West Yorkshire (GB)**
Inventor: **McKenzie, Frank, 8 Coppley Park Mews
Staleybridge, Tameside Greater Manchester (GB)**

(74) Representative: **Orr, William Maclean et al, Haseltine
Lake & Co Hazlitt House 28 Southampton Buildings
Chancery Lane, London WC2A 1AT (GB)**

(54) **Coupling device.**

㊼ A pipe coupling for use in a fire-prevention sprinkler system comprises a length of pipe (10) and a pipe fitting (11) having a socket (12) to receive one end (13) of the pipe. A first annular recess (16) in the socket receives a sealing ring (15) which seals the outer periphery of the pipe end. A second annular recess (17) in the socket cooperates with a locking ring (14) and with an annular shoulder (20) on the outer periphery of the pipe end in order to allow entry of the pipe end into the socket, but thereafter to resist withdrawal of the pipe end from the socket. The annular shoulder (20) comprises a ramp which increases in its radial extent in the direction towards the entry end (21) of the pipe.

In order to facilitate dis-assembly of the pipe coupling without the use of special tools, it is preferred that a third annular recess (24) is provided in the socket in order to receive the locking ring (14) upon further inward movement of the pipe. The radial depth of the third recess (24) is greater than that of the second recess (17) so that the pipe can be withdrawn thereafter, without there being any engagement between the locking ring and the annular shoulder.

-1-

Coupling Device

This invention relates to a pipe coupling and particularly though not exclusively, to a pipe coupling which is intended to form part of a sprinkler fire-prevention system.

Conventionally, a sprinkler system comprises a pipe layout which is provided, at predetermined locations throughout the system, with automatically triggered sprinkler heads which each operate to discharge water sprays onto the area below the head when a temperature in excess of a predetermined maximum is monitored in the region of the head (generated by an outbreak of fire in the region). A sprinkler head is usually mounted in a pipe fitting which is coupled with one or more lengths of pipe. The coupling with a length of pipe is usually achieved by a threaded interconnection of the fitting and the length of pipe as a conventional plumbing technique.

When the fitting is used to join together two or more lengths of pipe, assembly and handling of the components is awkward and time-consuming, since it will be necessary to rotate at least some of the pipe lengths (which may be of considerable length), in order to couple them with the pipe fitting.

It is an object of the invention to provide a pipe coupling, composed of a length of pipe and a fitting connected thereto, which can be assembled and disassembled in simple manner without the necessity to rotate the pipe and the fitting relative to each other, while providing a satisfactory sealed joint therebetween in the assembled state.

According to the invention there is provided a pipe coupling comprising:

a length of pipe and a pipe fitting having a socket to receive one end of the pipe;

a locking ring engageable with said socket and with the outer periphery of said one end of the pipe in order to resist relative withdrawal of the pipe from the socket;

and a sealing ring engageable sealingly between the outer periphery of said one end of the pipe and said socket in order to seal the coupling against liquid leakage outwardly of the coupling along said outer periphery of said one end of the pipe;

in which said socket has first and second annular recesses, said sealing ring being receivable in said first recess;

and in which the outer periphery of said one end of the pipe has an annular shoulder having a radial extent which increases in the direction towards the entry end of the pipe, said annular shoulder cooperating with said second recess of the socket in order to receive said locking ring in the assembled state of the pipe and the pipe fitting, and said locking ring being engageable with said shoulder so as to resist relative separation of the pipe and the socket.

The annular shoulder forms an annular groove in the external periphery of the pipe end in which the locking ring can be received initially, prior to assembly of the pipe with the fitting. The locking ring is radially inwardly deformable so as to be received wholly by said groove as the pipe enters the socket, but is able to move radially outwardly, by the inherent resilience of the locking ring, into locking engagement with the second recess in the socket when it comes into registry

0014094

therewith.

By virtue of the increasing radial extent of the annular shoulder in the direction towards the entry end of the pipe, the annular groove is defined partly by an inclined ramp which applies a radially outward locking force on the locking ring which increases as the pipe moves axially outwardly relative to the fitting so as to form a very secure assembly.

It is preferred that the inclined ramp comprises a frusto-conical surface which merges, at its radially larger end, into the outer periphery of the pipe. Thus, the annular shoulder may be formed conveniently by rolling the annular groove in a cylindrical portion of the periphery of the pipe.

The locking ring is conveniently formed to be radially deformable by being made as a split ring.

To assist the entry of the pipe into the socket, it is preferred that the entry to the socket and/or the entry end of the pipe have tapered surfaces.

In a preferred mode of assembly, the locking ring is fitted in the groove of the pipe and the sealing ring is fitted in the first annular recess in the socket. The pipe is then caused to enter the socket , whereby the locking ring is radially inwardly deformed  to allow entry of the pipe, and the pipe moves inwardly of the socket until such time as the locking ring snaps outwardly into engagement with the second annular recess. During this movement of thepipe, the sealing ring engages the outer periphery of the pipe and forms a firm seal therewith.    Conveniently, the sealing ring comprises an O-ring, though other configurations may be adopted according to     specific requirements.

Upon completion of the assembly, a secure, sealed coupling is obtained, and any tendency to cause uncoupling movement will be met by a correspondingly increased locking-resistance by virtue of the engagement between the locking ring and the inclined ramp.

In service, substantial water pressures are usually encountered e.g. up to 200 psi, and this will tend to cause relative separation of the pipe and socket. However, as indicated above, this will be met by correspondingly increased resistance to relative outward movement.

Thus, simple assembly can be achieved by carrying out a relative axial movement between the pipe and the socket, which is a significant technical advantage over the known screw-threaded systems.

According to a preferred aspect of the invention, means is provided to enable simple dis-assembly, without the use of special tools, by a relative axial movement of the pipe and socket. To this end, a third annular recess may be provided in the wall of the socket which is located axially inwardly of the second annular recess and which has a greater radial depth than the latter. Also, the second recess may have a guide surface which is engageable with the locking ring, upon axial inward movement of the pipe, in order to deform the locking ring radially inwardly and thereby to allow further inward movement of the pipe in the socket. This is continued until the locking ring snaps into the third recess. However, by virtue of the greater radial depth of the third recess, the locking ring can be received therein to a sufficient extent that the pipe can be withdrawn (axially outwardly) from the socket without there being any lockingengagement between the locking ring and the annular shoulder.

The pipe coupling according to the invention has been developed primarily for use in a sprinkler system, in which case the pipe fitting is preferably provided with a sprinkler head which may take the form of any suitable commercially available sprinkler heads.

The pipe fitting may be constructed to join one or more lengths of pipe thereto. When the pipe fitting is intended to join together two lengths of pipe, the fitting will be provided with a pair of sockets as aforesaid, preferably coaxial so as to provide an "in line" fitting, and a socket for a removable sprinkler head may extend perpendicular to said pair of sockets at a location intermediate the axially inner ends thereof.

The pipe and pipe fitting may be formed in any suitable plumbing material.

To facilitate the assembly of the components, an indicator may be provided on the pipe to give visual indication that the pipe has entered the socket by a sufficient amount to allow the locking ring to engage the second annular recess. This may comprise an indicator on the outer periphery of the pipe end arranged so as to be located adjacent the mouth of the socket when the locking ring is adjacent the second annular recess.

If desired, a further indicator may be arranged on the pipe exterior to indicate entry of the pipe to a position in which the locking ring is adjacent the third recess.

Conveniently, an abutment may be provided to limit the extent of inward movement of the pipe in the socket.

One embodiment of pipe coupling according to the invention will now be described in detail, by way of example only, with reference to the accompanying drawings in which:-

Figure 1 is a longitudinal sectional view of a pipe fitting of the pipe coupling;

Figure 2 is an exploded view of the pipe fitting and a length of pipe to be coupled therewith;

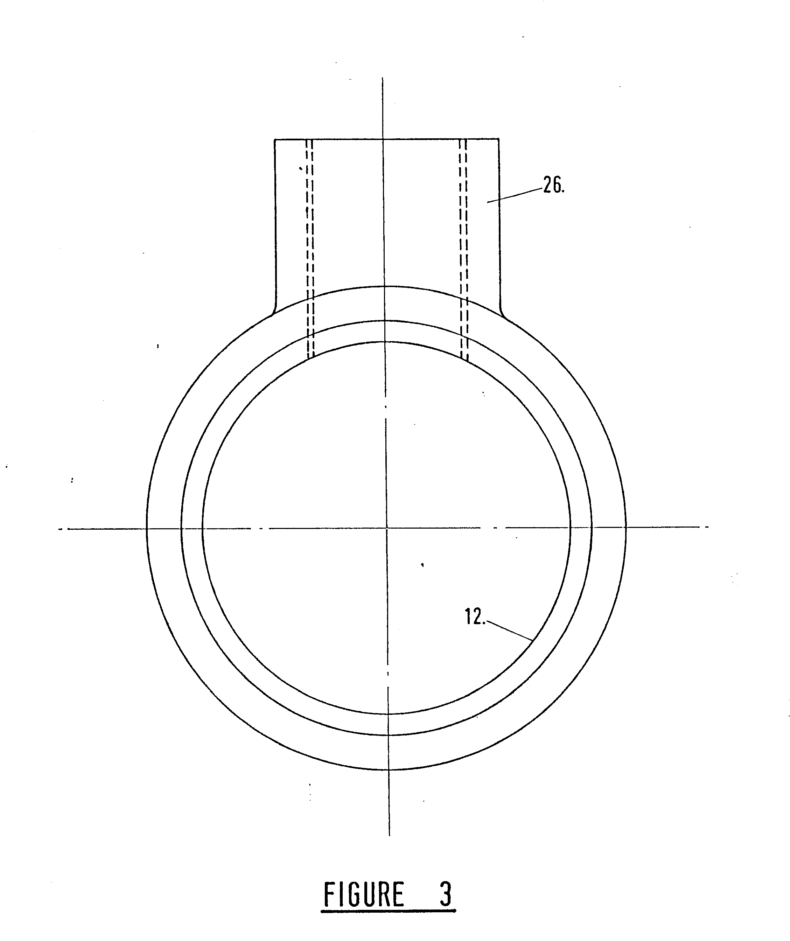

Figure 3 is a cross-sectional view of the pipe fitting; and

Figure 4 is a detail view of part of the outer periphery of an entry end of the pipe shown in Figure 2.

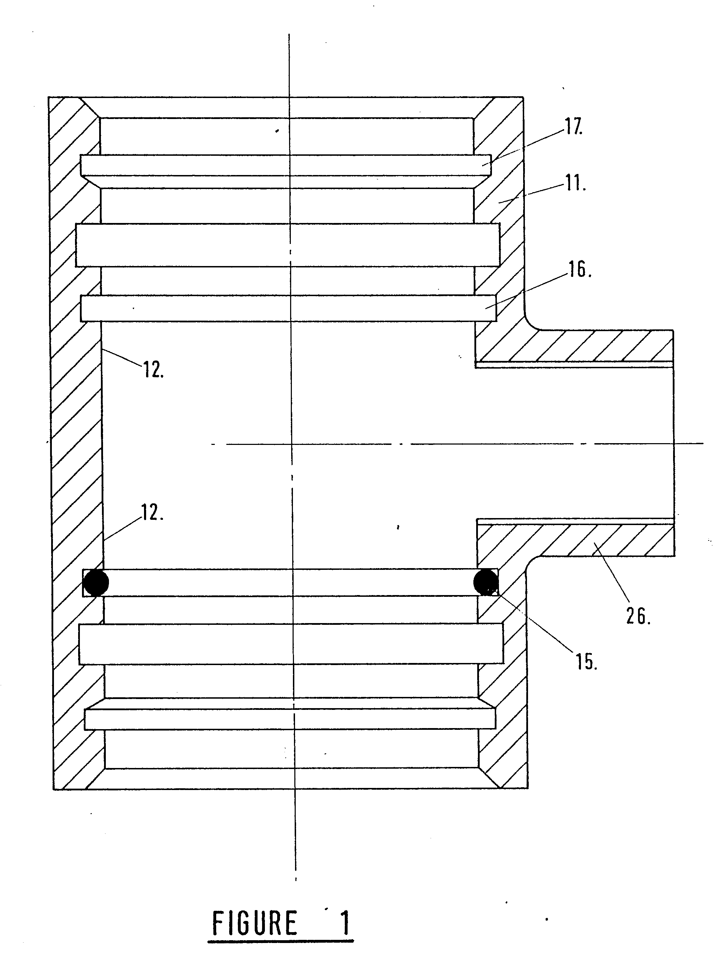

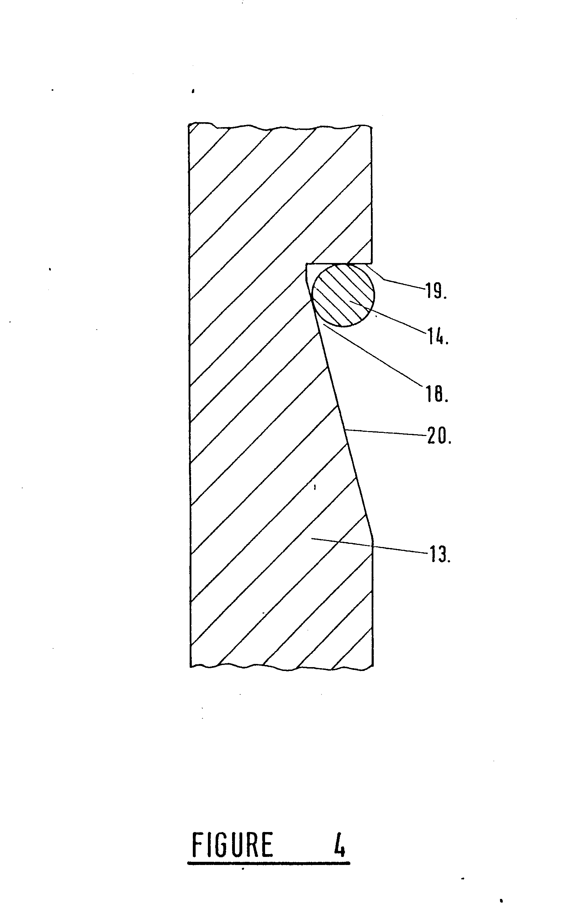

Referring now to the drawings, there is shown a pipe coupling which is intended to form part of a sprinkler fire-prevention system. The pipe coupling comprises a length of pipe 10 and a pipe fitting 11 having

0014094

a socket 12 to receive one end 13 of the pipe 10. A locking ring 14 (see Fig. 4) is engageable with the socket 12 and with the outer periphery of the end 13 of the pipe 10 in order to resist relative withdrawal of the pipe from the socket. A sealing ring is engageable sealingly between the outer periphery of the pipe end 13 and the socket 12 in order to seal the pipe coupling against liquid leakage outwardly of the coupling along the outer periphery of the end 13. A sealing ring 15 is illustrated in the right hand portion of the pipe fitting 11 shown in Figure 1.

The socket 12 is formed with a first annular recess 16 in which the sealing ring 15 is received. The socket 12 also has a second annular recess 17 which is intended to cooperate with the locking ring 14 in order to resist withdrawal of the pipe 10 from the socket 12.

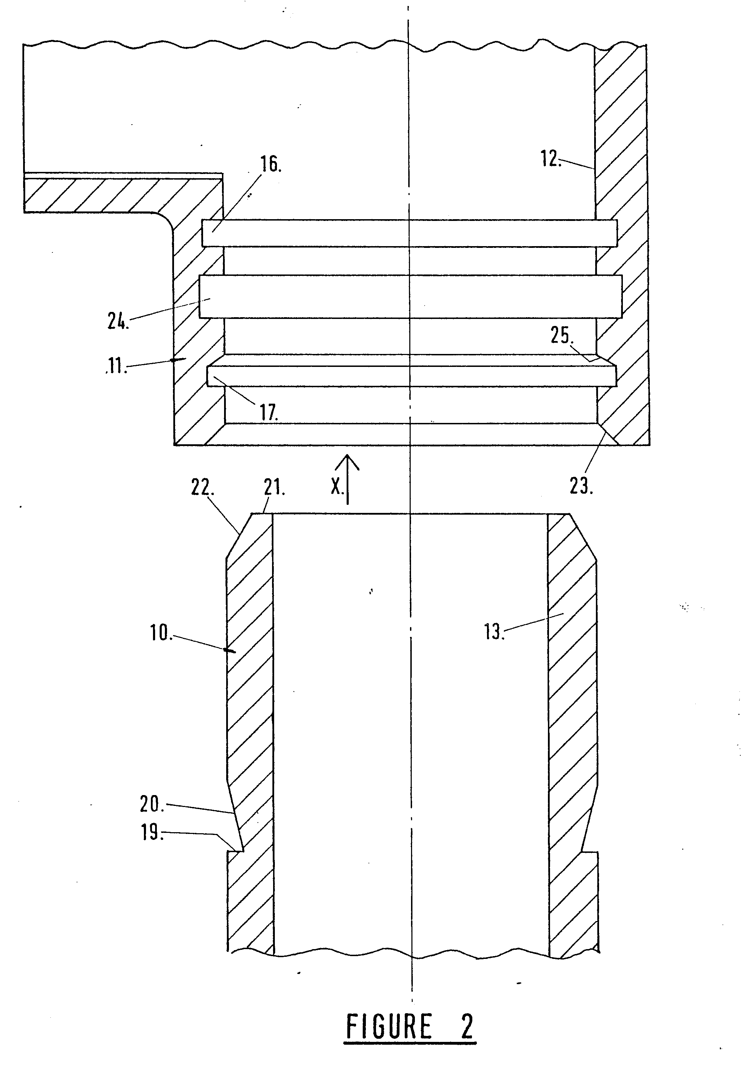

As shown in Figure 4, the locking ring 14 is received in an annular groove 18 which is formed in the outer periphery of the pipe end 13 and which is defined by a radially extending step 19 and a frusto-conical ramp 20. It will be noted from Figure 4 that the radially larger end of the ramp 20 merges smoothly with the outer periphery of the cylindrical end 13 of the pipe 10, and that ramp 20 constitutes an annular shoulder which has a radial extent which increases progressively in the direction towards the entry end 21 (see Fig.2) of the pipe end 13.

The locking ring 14 is formed so as to be radially inwardly deformable, and preferably comprises a split ring. When the pipe 10 is advanced into the socket 12 in the direction of the arrow X in Figure 2, the locking ring 14 is deformed radially inwardly into the annular groove 18 as the pipe end 13 enters the socket 12, and the pipe end 13 is advanced until such time as the locking ring 14 comes into registry with the second annular recess 17. By virtue of the inherent resilience of the locking ring 14, the latter snaps radially outwardly into locking engage -ment with the annular recess 17. The engagement with the recess 17 is such as to resist axial withdrawal of the pipe end 13 from the socket 12.

Prior to assembly of the pipe end 13 in the socket 12, the sealing ring 15 is fitted in the first annular recess 16. As the pipe end 13 enters the socket 12, the outer periphery of the pipe end 13 engages with the sealing ring 15 to form a firm seal therewith.

When the pipe end 13 has been assembled in the socket 12, a secure coupling is achieved in that the locking ring 14 applies a progressively increasing locking-force between the socket 12 and the pipe end 13 as the pipe end 13 tends to move axially outwardly relative to the socket 12. Thus, in that the locking ring 14 engages lockingly with the second annular recess 17, any tendency for the pipe end 13 to withdraw from the socket 12 in a direction opposite to the arrow X will cause the locking ring 14 to move up the ramp 20 with a correspondingly increasing locking reaction betweenthe ramp 20 and the recess 17. Furthermore, in service, substantial water pressures will be generated in the pipe system of which the pipe coupling forms a part, and such water pressure will tend to move the pipe 10 axially outwardly relative to the socket 12. However, this relative separation movement will be opposed by a progress -ively increasing locking force by virtue of the interengagement of the locking ring 14 between the ramp 20 and the annular recess 17.

In order to facilitate entry of the pipe 10 in the socket 12, the leading end 21 of the pipe end 13 has a tapering surface 22 and the entry end of the socket 12 has a tapering surface 23.

In order to enable dis-assembly of the coupling without the use of special tools, means is provided in the socket 12 to cooperate with the locking ring 14 upon axial inward movement of the pipe end 13 relative to the socket 12. To this end, the socket 12 is formed with a third annular recess 24 which is located axially inwardly of the second annular recess 17 and has a greater radial depth than the latter. The second annular recess 17 has a guide surface 25 which deforms the locking ring 14 radially inwardly upon axial inward movement of the pipe end 13, and the pipe end 13 travels axially inwardly until the locking ring 14 comes into registry with the third annular recess 24. The locking ring 14 then snaps radially outwardly into the third annular recess 24. However, by virtue of the greater radial depth of the recess 24, the locking ring 14 can be received therein to a sufficient extent that the pipe end 13 can be withdrawn (axially outwardly) from the socket 12 without there being any locking engagement between the locking ring 14 and the annular shoulder formed by ramp 20. Therefore, by this means, the pipe end 13 can be disassembled from the pipe fitting 11 without the use of special tools.

As shown particularly in Figure 1, the pipe fitting 11 has a pair of axially aligned sockets 12, each of which is intended to receive the end of a corresponding length of pipe. When the pipe fitting 11 is intended to form part of a sprinkler system, the fitting 11 is provided with a further socket 26 which extends perpendicular to the common axis of the sockets 12 and which is located between the axially inner ends thereof. The socket 26 is adapted to receive a sprinkler head (not shown). The sprinkler head may comprise any of the commercially available sprinkler heads.

Preferably, an indicator is provided on the pipe 10 in order to provide visual indication, upon insertion of the pipe 10 in the socket 12, that the locking ring 14 has come into registry with the annular recess 17. This means may comprise, conveniently, a pip or other indicator applied to the outer periphery of the pipe 10 at a suitable location. Also, if desired, an indicator may be provided on the pipe 10 in order to give indication of the location of the locking ring 14 adjacent to the recess 24. Further, an abutment may be provided in order to limit the extent of inward movement of

0014094

the pipe 10 relative to the socket 12 .

While there has been illustrated an arrangement of three annular recesses (16, 24 and 17) in the wall of the socket 12, this may be modified (if desired) so as to provide only two annular recesses which are capable of fulfilling the functions of the three recesses 16, 24 and 17. To this end, the recess 24 is not formed in the socket, but the recess 16 (which previously only housed the sealing ring 15) is enlarged so as to be capable of receiving both the sealing ring 15, and also the locking ring 14 in the same way as the latter was received by the recess 24.

0014094

CLAIMS

1.      A pipe coupling comprising:
        a length of pipe (10) and a pipe fitting (11)
having a socket (12) to receive one end (13) of the pipe;
        a locking ring (14) engageable with said socket
and with the outer periphery of said one end of the pipe
in order to resist relative withdrawal of the pipe from the
socket;
        a sealing ring (15) engageable sealingly between the
outer periphery of said one end of the pipe and said socket
in order to seal the coupling against liquid leakage outwardly of the coupling along said outer periphery of said
one end of the pipe;
        and first and second annular recesses (16,17)
formed in said socket, said sealing ring being receivable
in said first recess (16);
        characterised in that the outer periphery of said one
end of the pipe has an annular shoulder (20) having a radial
extent which increases in the direction towards the entry end
(21) of the pipe, said annular shoulder co-operating with
said second recess (17) of the socket in order to receive
said locking ring (14) in the assembled state of the pipe
and the pipe fitting, and said locking ring being engageable
with said shoulder so as to resist relative separation of
the pipe and the socket.

2.      A pipe coupling according to claim 1, characterised
in that the annular shoulder (20) comprises a frusto-
conical surface which merges, at its radially larger end,
into the outer periphery of the pipe.

3.      A pipe coupling according to claim 2, characterised
in that the annular shoulder (20) is formed by rolling an
annular groove in a cylindrical portion of the periphery of

0014094

the pipe.

4.　　A pipe coupling according to any one of claims 1 to 3, characterised in that the locking ring (14) is a split ring.

5.　　A pipe coupling according to any one of claims 1 to 4, characterised in that the entry (23) to the socket and/or the entry end (22) of the pipe have tapered surfaces.

6.　　A pipe coupling according to any one of claims 1 to 5, characterised in that the sealing ring (15) is an O-ring.

7.　　A pipe coupling according to any one of claims 1 to 6, characterised in that a third annular recess (24) is provided in the wall of the socket which is located axially inwardly of the second annular recess (17) and which has a greater radial depth than the latter, the third annular recess (24) being arranged to receive the locking ring (14) to such an extent, upon further relative inward movement of the pipe in the socket, that thereafter the pipe can be withdrawn from the socket without there being any locking engagement between the locking ring and the annular shoulder (20).

8.　　A pipe coupling according to any one of claims 1 to 7, characterised in that the pipe fitting is provided with a sprinkler head.

9.　　A pipe coupling according to any one of claims 1 to 8, characterised in that the pipe fitting (11) has two sockets (12), preferably arranged in line.

10.　　A pipe coupling according to claim 7, characterised in that one or more indicators are provided on the pipe
(10) to give visual indication that the pipe has entered
the socket (12) by a sufficient amount to allow the locking
ring a) to engage the second annular recess 17 and/or
b) to enter the third annular recess (24).

FIGURE 1

0014094

FIGURE 2

26.

12.

FIGURE 3

0014094

19.

14.

18.

20.

13.

FIGURE    4

European Patent Office

# EUROPEAN SEARCH REPORT

0014094
Application number

EP 80 30 0199

## DOCUMENTS CONSIDERED TO BE RELEVANT

| Category | Citation of document with indication, where appropriate, of relevant passages | Relevant to claim |
|---|---|---|
| X | FR - A - 2 299 588 (TCH-HYCOP.AB)<br>* Page 2, lines 29-32; figures 3,4 *<br>-- | 1-6,9 |
| X | FR - A - 2 304 852 (BERGER INDUSTRIES INC.)<br>* Figures 19,20,31,38 *<br>-- | 1-6 |
| | BE - A - 712 075 (VAN DER HOVEN)<br>* Figures *<br>-- | 1,6,9 |
| A | GB - A - 1 221 707 (SELBSTTATIGE FEUERLOSCHANLAGEN GmbH)<br>* Figures *<br>---- | 8 |

### CLASSIFICATION OF THE APPLICATION (Int. Cl. 3)

F 16 L 37/08

### TECHNICAL FIELDS SEARCHED (Int.Cl. 3)

F 16 L
A 62 C

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-04-1980 | HUBEAU |

EPO Form 1503.1 06.78